# EUROPÄISCHE PATENTSCHRIFT

(11) **EP 3 621 806 B1**
(45) Veröffentlichungstag und Bekanntmachung des Hinweises auf die Patenterteilung: **14.04.2021**
(21) Anmeldenummer: 18724232.6
(22) Anmeldetag: 11.05.2018
(51) Int. Cl.: B32B 27/08, A47B 95/04, A47B 96/20, B32B 27/30, B32B 27/32, B32B 27/40

(54) **KANTENLEISTE**
EDGE STRIP
BANDE DE CHANT

(30) Priorität: 12.05.2017 DE 202017102859 U
(43) Veröffentlichungstag der Anmeldung: 18.03.2020
(73) Patentinhaber: SURTECO GmbH, 86647 Buttenwiesen (DE)
(72) Erfinder: OTTOW, Martin, 45134 Essen (DE); HERMANNS, Markus, 45966 Gladbeck (DE); KREMER, Christoph, 46286 Dorsten (DE)
(74) Vertreter: Andrejewski - Honke Patent- und Rechtsanwälte Partnerschaft mbB
(86) Internationale Anmeldenummer: PCT/EP2018/062254
(87) Internationale Veröffentlichungsnummer: WO 2018/206792

(56) Entgegenhaltungen:
- EP-A1- 2 774 744
- DE-U1-202009 009 253
- DE-U1-202015 104 158

## Beschreibung

Die Erfindung betrifft eine Kantenleiste für die Schmalflächenbeschichtung von plattenförmigen Werkstücken, insbesondere von Möbelplatten, mit zumindest einer (frontseitigen) Grundschicht und einer (rückseitig an der Deckschicht angeordneten) Schmelzschicht zum Befestigen der Kantenleiste an dem Werkstück, wobei die Schmelzschicht aus thermoplastischem Kunststoff auf TPU-Basis (Polyurethan (thermoplastisch)) besteht. Bei den plattenförmigen Werkstücken bzw. Möbelplatten kann es sich insbesondere um Holzwerkstoffplatten, z. B. Spanplatten, Faserplatten oder dergleichen oder auch um Verbundplatten handeln. Diese können einseitig oder beidseitig mit Oberflächenbeschichtungen versehen sein. Zum Befestigen der Kantenleiste an der Schmalfläche des Werkstücks wird die Kantenleiste aufgeschmolzen, und zwar z. B. mit Mikrowellenstrahlung. Alternativ umfasst die Erfindung aber auch den Einsatz anderer Strahlungsquellen, insbesondere Laserstrahlung. Außerdem kann auch Heißluft verwendet werden. Die Deckschicht wird auch als Grundschicht bezeichnet, es handelt sich dabei um die im montierten Zustand sichtbare und folglich frontseitige Schicht der Kantenleiste. Auf der Rückseite dieser Grundschicht ist die Schmelzschicht angeordnet, mit welcher die Kante im Zuge der Montage (adhäsiv) an dem Werkstück befestigt wird.

Es ist grundsätzlich aus der Praxis bekannt, zur Befestigung von Kantenleisten auf beispielsweise Schmalflächen von Möbelplatten einen Schmelzklebstoff im Zuge der Befestigung bzw. unmittelbar vor der Befestigung auf die Kantenleiste aufzutragen. Die Befestigung erfolgt in sogenannten Kantenbandanleimmaschinen. Bei einer solchen Befestigung der Kantenleiste auf den Schmalseiten von Möbelplatten besteht ein ständiges Problem darin, dass eine sichtbare Fuge zwischen den Deckleisten und den Möbelplatten bzw. ihren Schmalseiten entstehen kann.

Zur Vermeidung der beschriebenen Schmelzklebstofffugen, welche insbesondere bei der Benutzung bzw. Reinigung deutlich sichtbar werden, wurde vorgeschlagen, vollständig auf einen Schmelzklebstoff zu verzichten. Aus der EP 1 163 864 B1 ist daher eine klebstofffreie Verbindung zwischen einer Deckleiste bzw. Kunststoffkante und einer Möbelplatte bekannt, d. h. die Kunststoffkante wird unmittelbar und ohne Kleber auf die Möbelplatte gefügt. Dazu wird die Oberfläche der Kunststoffkante durch Laserstrahlung aufgeschmolzen, so dass eine Laserschweißverbindung einer kleberfreien Kunststoffkante mit der Möbelplatte erfolgt.

Alternativ wird in der EP 1 852 242 A1 vorgeschlagen, eine Deckleiste mit einer einseitig auf die Deckleiste aufgebrachten Schmelzklebstoffschicht zu verwenden, wobei die Deckleiste mit der Schmelzklebstoffschicht im Wege der Coextrusion hergestellt ist. Dabei ist die Schmelzklebstoffschicht bevorzugt in der Farbe der Deckleiste eingefärbt, so dass sich die Deckleiste an einer Möbelplatte befestigen lässt, ohne dass eine sichtbare Klebstofffuge erkennbar ist. Der Schmelzklebstoff bzw. die Schmelzklebstoffschicht ist dabei mittels Laserstrahlung aufschmelzbar bzw. aktivierbar. Die Deckleiste kann z. B. aus ABS und die Schmelzklebstoffschicht auf EVA-Basis, CoPa-Basis oder TPU-Basis ausgebildet sein.

In der WO 2009/26977 A1 wird eine Kantenleiste mit einer Schmelzschicht vorgeschlagen, welche sowohl polare als auch unpolare Anteile im Molekülaufbau enthalten soll. Die Schmelzschicht kann dabei mit laserabsorbierenden Zusatzstoffen versehen sein. Die Energie zum Aufschmelzen der Schmelzschicht kann in Form von Laserlicht, Heißluft, Mikrowellen, Ultraschall etc. zugeführt werden. In einer Ausführungsform soll die Kantenleiste bzw. Strukturschicht aus Polypropylen und die Schmelzschicht aus einem Pfropfcopolymer, vorzugsweise Maleinsäureanhydrid - gepfropftem Polypropylen bestehen. Alternativ wird bei einer Strukturschicht aus ABS eine Schmelzschicht aus Polyurethan (thermoplastisch) vorgeschlagen.

Außerdem beschreibt die EP 2 366 540 A1 eine Kantenleiste aus thermoplastischem Kunststoffmaterial in mehrschichtiger Struktur, insbesondere für Möbelplatten, welche dadurch gekennzeichnet ist, dass diese über eine im Schmelzzustand hoch fließfähige Schmelzschicht verfügt, die eine vergleichbare Härte und Schmelztemperatur zumindest einer weiteren Schicht besitzt, so dass insgesamt die Kantenleiste eine konstante Härte und Schmelztemperatur aufweisen soll. Die Kantenleiste soll aus einem ein- oder durchgefärbten thermoplastischen Kunststoffmaterial, insbesondere umfassend Polymere und Copolymere des Styrols, der Poleolefine, der Polycarbonate, der Polyester, ein Polymer auf Basis von Acrylaten oder des Vinylclorids bestehen.

Aus der WO 2016/005337 A1 kennt man eine Kantenleiste der eingangs beschriebenen Art, bei der die Schmelzschicht einen dielektrischen Verlustfaktor für Mikrowellenstrahlung aufweist, welcher größer als der dielektrische Verlustfaktor der Grundschicht sein soll. Diese Kantenleiste soll folglich in besonderem Maße für die Aktivierung und folglich das Aufschmelzen mittels Mikrowellenstrahlung geeignet sein. Die Schmelzschicht soll aus zumindest einem thermoplastischen Polymer, z. B. aus der Gruppe der Polystyrole (z. B. ABS), Polyvinylchloride (z. B. PVC-U), Polypropylene (PP), Polyethylene (PE), Polyamide (PA), thermoplastische Elastomere auf Polyolefinbasis oder Styrol-Block-Copolymere, thermoplastische Copolyester, thermoplastische Copolyamide oder thermoplastische Polymetacrylate, thermoplastische Polyurethane, Vinylacetat-Ethylen-Copolymere, Methacrylat-Ethylen-Copolymere bestehen. Bevorzugt soll die Schmelzschicht mit Additiven für die Erhöhung des dielektrischen Verlustfaktors versehen sein. Dabei kann es sich z. B. um elektrisch leitfähige Partikel oder Partikel mit elektrisch leitfähiger Beschichtung handeln, z. B. mineralische Partikel mit einer antimondotierten Zinnoxidschicht.

Die DE 10 2013 022 086 A1 beschreibt eine Kantenleiste mit einer Schmelzschicht, wobei die Schmelzschicht ein thermoplastisches Polyolefin umfassen soll, und zwar ein leicht fließendes Polyolefin. Bevorzugt soll die Schmelzschicht eine Kombination von leicht fließenden Polyolefinen sein.

In der DE 20 2009 009 253 U1 wird eine Kantenleiste der eingangs beschriebenen Art behandelt, bei welcher eine Grundschicht mit einer plasmaaktivierbaren Klebstoffschicht versehen ist, die mindestens einen Schmelzklebstoff z.B. auf Basis von Polyurethan-Elastomeren (TPU) aufweisen kann.

Aus der DE 20 2015 104 158 U1 ist eine speziell ausgebildete Kantenleiste für die Beschichtung profilierter Schmalflächen bekannt, in der rückseitig eine oder mehrere sich in Längsrichtung erstreckenden Nuten angeordnet sind, die im Zuge der Montage der Kantenleiste an dem Werkstück eine oder mehrere Knickstellen bilden. Die Schmelzschicht kann aus thermoplastischem Kunststoff gefertigt sein, z.B. basierend auf TPU.

Ferner beschreibt die EP 2 774 744 A1 eine Kantenleiste mit einer Deckschicht und einer Schmelzschicht, wobei auf der der Deckschicht abgewandten Rückseite der Schmelzschicht eine Hydrophobierungsschicht aus einem Hydrophobierungsmittel angeordnet ist. Bei der Schmelzschicht kann es sich um eine Schmelzklebstoffschicht oder um eine schmelzklebstoffartige Funktionalschicht handeln, die z.B. auf TPU basiert.

In der EP 2 653 513 A2 wird im Übrigen ein Verklebungsverfahren beschrieben, bei welchem ein Kantenband mit einer mit Laserstrahlung aktivierbaren Klebstoffschicht beaufschlagt wird, wobei dieser Schicht ein absorbierendes Additiv (Laseradditiv), insbesondere ein Pigment, zugesetzt wird. Die mittels Laserstrahlung aktivierbare Klebstoffschicht wird ausgehend von einer Dispersion oder Lösung mindestens eines Klebstoffpolymers erhalten.

Es besteht folglich insgesamt das Bedürfnis, Kantenleisten für die Schmalflächenbeschichtung von plattenförmigen Werkstücken, insbesondere von Möbelplatten zur Verfügung zu stellen, welche mit einer Schmelzschicht bzw. Funktionalschicht versehen sind, die mittels geeigneter Quellen, z. B. mittels Mikrowellenstrahlung oder auch Laserstrahlung aufgeschmolzen und mittels Andruck dauerhaft auf das Werkstück aufgebracht werden kann. Bei der Entwicklung erster Ausführungsformen konzentrierte man sich in der Praxis auf Kantenleisten für die Aktivierung mittels Laserstrahlung. Inzwischen gewinnt der Einsatz von Mikrowellenstrahlung (oder alternativ auch Heißluft) zunehmend an Bedeutung. Im Übrigen besteht in der Praxis Bedarf nicht nur an PP-Kanten mit geeigneten Funktionalschichten, sondern zunehmend auch an anderen Materialien, z. B. ABS-Kanten, die z. B. mit Funktionalschichten auf TPU-Basis versehen sind und die z. B. mittels Mikrowellenstrahlung aktivierbar sind (vgl. WO 2016/0905337 A1). Die beschriebenen Konzepte haben sich bewährt, sie sind jedoch weiterentwicklungsfähig. - Hier setzt die Erfindung ein.

Der Erfindung liegt die Aufgabe zugrunde, eine Kantenleiste für die Schmalflächenbeschichtung von plattenförmigen Werkstücken der eingangs beschriebenen Art zu schaffen, welche sich wirtschaftlich herstellen und mit hoher Qualität verarbeiten lassen.

Zur Lösung dieser Aufgabe lehrt die Erfindung eine Kantenleiste mit den Merkmalen des Anspruchs 1 und eine Möbelplatte mit den Merkmalen des Anspruchs 9. Bei einer gattungsgemäßen Kantenleiste der eingangs beschriebenen Art ist vorgesehen, dass die Schmelzschicht aus einem Polymergemisch (und folglich Polymerblend) besteht, welches aus zumindest einem TPU-Polymer und zumindest einem Zusatzpolymer mit gegenüber dem TPU-Polymer erhöhter Polarität besteht.

Die Erfindung geht dabei von der Erkenntnis aus, dass sich Kantenleisten mit einer Schmelzschicht auf TPU-Basis wirtschaftlich herstellen und gut verarbeiten lassen, wobei solche TPU-Funktionalschichten zum Beispiel für ABS-Kanten bzw. Kanten mit ABS-Deckschicht zum Einsatz kommen. Ferner geht die Erfindung von der Erkenntnis aus, dass sich solche Kantenleisten mit Funktionalschicht auf TPU-Basis nicht nur hervorragend mit Laserstrahlung, sondern insbesondere auch hervorragend mit Mikrowellenstrahlung aufschmelzen und folglich verarbeiten lassen. Die Erfindung schließt damit an die Überlegungen aus der WO 2016/005337 A1 an. Auch eine Verarbeitung mit Heißluft ist möglich.

Davon ausgehend hat die Erfindung erkannt, dass sich die Verarbeitung weiter optimieren lässt, wenn die Schmelzschicht nicht (nur) aus einem TPU-Polymer und gegebenenfalls entsprechenden Zusatzstoffen oder Additiven besteht, sondern aus einem Polymerblend auf TPU-Basis, wobei dem TPU-Polymer zumindest ein weiteres Zusatzpolymer zugemischt wird, welches gegenüber dem TPU-Polymer eine erhöhte Polarität aufweist. Dabei handelt es sich um ein Styrolcopolymer. Besonders bevorzugt kommt als Zusatzpolymer ein Styrol-Maleinsäureanhydrid-Copolymer zum Einsatz. Ein solches Copolymer wird auch als SMA oder SMAH bezeichnet.

Die Mischung des TPU-Polymers mit einem solchen Zusatzpolymer verbessert die Funktionalität in mehrfacher Weise. Denn über den erhöhten polaren Charakter des Zusatzpolymers wird einerseits die Anbindung an das plattenförmige Werkstück, insbesondere an einen Holzwerkstoff verbessert. Andererseits führt die Erhöhung der Polarität zur Verbesserung der Aktivierbarkeit der Schmelzschicht mittels Strahlung und insbesondere mittels Mikrowellenstrahlung.

Versuche mit TPU-Funktionalschichten in der Praxis haben gezeigt, dass mit einem weichen TPU besonders gute Verklebungseigenschaften erzielt werden, dass die Möglichkeiten der Nachbearbeitung der Kantenleiste nach der Befestigung an der Möbelplatte jedoch begrenzt sind. Diese Möglichkeiten der Nachbearbeitung lassen sich zwar durch harte TPU-Schichten verbessern, jedoch zu Lasten der Verklebbarkeit. Erfindungsgemäß kann nun ein verhältnismäßig hartes TPU-Polymer eingesetzt werden und durch die Mischung mit dem Zusatzpolymer lassen sich die Verklebungseigenschaften verbessern, ohne dass Nachteile hinsichtlich der Nachbearbeitung in Kauf genommen werden müssen.

Der Einsatz des beschriebenen Zusatzpolymers als Styrolcopolymer führt im Übrigen nicht nur zu einer guten Haftung an einem Holzwerkstoff, sondern auch zu einer guten Haftung an der Deckschicht bzw. Grundschicht, und zwar insbesondere dann, wenn diese aus ABS oder auf ABS-Basis gefertigt ist. Das Zusatzpolymer führt zu einer besseren Materialverträglichkeit von einerseits Schmelzschicht und andererseits Deckschicht und dieses führt insbesondere zur verbesserten Verarbeitung bzw. Herstellung, z. B. auch bei der Coextrusion der Kantenleiste. Wird ein Styrolpolymer als Zusatzpolymer verwendet, führt dieses zu einer besseren Materialverträglichkeit mit einer Deckschicht auf Styrol-Basis bzw. mit einem Styrol-Anteil, z. B. mit einer Deckschicht aus ABS.

Besonders bevorzugt wird folglich eine Kantenleiste zur Verfügung gestellt, deren Deckschicht aus ABS gefertigt ist und deren Funktionalschicht aus dem beschriebenen Polymergemisch besteht. In alternativer Ausgestaltung kann jedoch auch eine Deckschicht aus anderem Material, z. B. aus PP zum Einsatz kommen.

Wie bereits beschrieben ist von besonderer Bedeutung, dass als Zusatzpolymer ein Styrolpolymer, z. B. SMA eingesetzt wird. Ergänzend kann das Polymergemisch zusätzlich zu dem TPU-Polymer und dem Zusatzpolymer, d.h. Styrolpolymer (z. B. SMA), ein weiteres Polymer enthalten, bevorzugt ein Ethylenmethacrylat (EMA). Die Erfindung umfasst folglich bevorzugt einerseits ein Polymergemisch aus TPU und SMA und andererseits ein Polymergemisch aus TPU und SMA sowie EMA. Durch das weitere Polymer, z. B. EMA, können weitere Eigenschaften der Schmelzschicht bzw. Kantenleiste positiv beeinflusst werden. So kann z. B. der Zusatz von EMA eine bessere Verträglichkeit mit einem gegebenenfalls aufzubringenden Haftvermittler bewirken.

Die erfindungsgemäße Kantenleiste lässt sich z. B. mittels Laserstrahlung verarbeiten, d. h. die Schmelzschicht wird im Zuge der Verarbeitung mit Laserstrahlung aufgeschmolzen und die Kantenleiste an dem Werkstück befestigt. Alternativ kommt jedoch auch das Aktivieren bzw. Aufschmelzen mit anderen Strahlungsquellen oder Strahlungsarten in Betracht, z. B. mit Heißluft oder Plasmastrahlung.

Ferner kann im Zuge der Verarbeitung Mikrowellenstrahlung zum Einsatz, d. h. die Schmelzschicht ist mit Mikrowellenstrahlung aufschmelzbar. Mikrowellenstrahlung meint im Rahmen der Erfindung elektromagnetische Strahlung mit einer Frequenz von 300 MHZ bis 300 GHz, die z. B. mit einem Magnetron erzeugt wird. Bevorzugt wird Mikrowellenstrahlung mit einer Frequenz von 902 MHz bis 928 MHz, z. B. 905 MHz oder Mikrowellenstrahlung mit einer Frequenz von 2,4 GHz bis 2,5 GHz, z. B. 2,45 GHz oder Mikrowellenstrahlung mit der Frequenz von 5,7 GHz bis 5,9 GHz, z. B. 5,8 GHz verwendet.

Die Schmelzschicht weist einen dielektrischen Verlustfaktor für Mikrowellenstrahlung auf, welcher größer als der dielektrische Verlustfaktor der Grundschicht ist. Insofern kann auf die Erkenntnisse aus der WO 2016/005337 A1 zurückgegriffen werden. Dazu kann die Schmelzschicht mit Additiven für die Erhöhung des dielektrischen Verlustfaktors versehen sein. Bei diesen Additiven kann es sich um elektrisch leitfähige Partikel, z. B. Ruß oder Metallpartikel, oder Partikel, z. B. mineralische Partikel, mit elektrisch leitfähiger Beschichtung handeln. Bei der Beschichtung kann es sich z. B. um eine antimondotierte Zinnoxidschicht handeln. Solche Additive werden z. B. von der Firma Merck unter der Produktbezeichnung Iriotec, z. B. Iriotec 7315, 7310 oder 7320 vertrieben.

Die Erfindung schließt dabei an die Überlegung an, dass sich die Aktivierbarkeit mittels Mikrowellenstrahlung (oder auch Laserstrahlung) durch solche Additive grundsätzlich verbessern lässt. Die Erfindung hat dabei jedoch erkannt, dass die erfindungsgemäße Schmelzschicht aus dem beschriebenen Polymergemisch mit erhöhter Polarität bereits eine verbesserte Einkopplung der Mikrowellen ermöglicht, so dass der Zusatz eines solchen Additivs (deutlich) reduziert werden kann. Die Reduzierung spezieller Additive hat dabei den Vorteil, dass gegebenenfalls auftretende Verfärbungen durch solche Additive reduziert bzw. vermieden werden können. Es liegt auch im Rahmen der Erfindung, vollständig auf derartige Additive zu verzichten.

Die erfindungsgemäße Kantenleiste, die zumindest aus der Deckschicht bzw. Grundschicht und der Schmelzschicht besteht, lässt sich z. B. durch Coextrusion oder Nachbeschichtung bzw. Post-Coextrusion herstellen. Bevorzugt wird dabei auf eine Haftvermittlerschicht zwischen der Grundschicht und der Schmelzschicht verzichtet. Die Erfindung umfasst im Übrigen auch Ausführungsformen, bei denen zusätzlich zu der Schmelzschicht weitere Schichten oder gegebenenfalls auch mehrere Schmelzschichten vorgesehen sind.

Der Anteil des Zusatzpolymers (z. B. SMA) in dem Polymergemisch beträgt z. B. 2 bis 20 Gew.-%, vorzugsweise 3 bis 10 Gew.-%, z. B. etwa 3 bis 7 Gew.-%. Der Anteil des gegebenenfalls eingesetzten weiteren Polymers (z. B. EMA) in dem Polymergemisch kann z. B. 2 bis 20 % Gew.-%, vorzugsweise 3 bis 10 Gew.-% betragen, z. B. 3 bis 7 Gew.-%. So kann das Polymergemisch z. B. 80 bis 94 Gew.-% TPU und 3 bis 10 Gew.-% SMA und 3 bis 10 Gew.-% EMA enthalten, beispielsweise 90 Gew.-% TPU und 5 Gew.-% SMA und 5 Gew.-% EMA.

Sofern ein Additiv zur Optimierung der Aktivierbarkeit mittels Mikrowellenstrahlung und/oder Laserstrahlung verwendet wird, beträgt der Anteil des Additivs in der Schmelzschicht z. B. 0,5 bis 10 Gew.-%, vorzugsweise 0,5 bis 5 Gew.-%.

Im Rahmen der Erfindung ist die Aktivierbarkeit und folglich das Aufschmelzen der Schmelzschicht mittels Mikrowellenstrahlung (oder alternativ auch Laserstrahlung oder Heißluft) von besonderer Bedeutung. Die Erfindung betrifft daher auch die Verwendung einer solchen Kantenleiste für die Befestigung an einem Werkstück, insbesondere einer Möbelplatte, wobei die Schmelzschicht mit Mikrowellenstrahlung, Laserstrahlung oder Heißluft aufgeschmolzen wird.

## Patentansprüche

1. Kantenleiste für die Schmalflächenbeschichtung von plattenförmigen Werkstücken, insbesondere von Möbelplatten, mit zumindest einer frontseitigen Deckschicht und einer Schmelzschicht aus thermoplastischem Kunststoff auf TPU-Basis für die Befestigung der Kantenleiste an dem plattenförmigen Werkstück, wobei die Schmelzschicht aus einem Polymergemisch (Polymerblend) besteht, **dadurch gekennzeichnet, dass** das Polymergemisch aus zumindest einem TPU-Polymer und zumindest einem Zusatzpolymer mit gegenüber dem TPU-Polymer erhöhter Polarität besteht,
wobei das Zusatzpolymer ein Styrolcopolymer ist.

2. Kantenleiste nach Anspruch 1, **dadurch gekennzeichnet, dass** das Zusatzpolymer ein Styrol-Maleinsäureanhydrid-Copolymer ist.

3. Kantenleiste nach Anspruch 1 oder 2, **dadurch gekennzeichnet, dass** der Anteil des Zusatzpolymers in dem Polymergemisch 2 bis 20 Gew.-% beträgt, z. B. 3 bis 10 Gew.-%.

4. Kantenleiste nach einem der Ansprüche 1 bis 3, **dadurch gekennzeichnet, dass** das Polymergemisch zusätzlich zu dem Zusatzpolymer mit erhöhter Polarität ein weiteres Polymer enthält, z. B. Ethylenmethacrylat (EMA).

5. Kantenleiste nach Anspruch 4, **dadurch gekennzeichnet, dass** der Anteil des weiteren Polymers, z. B. EMA, in dem Polymergemisch 2 bis 20 Gew.-%, z. B. 3 bis 10 Gew.-% beträgt.

6. Kantenleiste nach einem der Ansprüche 1 bis 5, **dadurch gekennzeichnet, dass** die Deckschicht aus ABS oder PP besteht.

7. Kantenleiste nach einem der Ansprüche 1 bis 6, **dadurch gekennzeichnet, dass** die Schmelzschicht mit Mikrowellenstrahlung, Laserstrahlung oder Heißluft aufschmelzbar ist.

8. Kantenleiste nach Anspruch 7, **dadurch gekennzeichnet, dass** die Schmelzschicht mit zumindest einem Additiv für die Erhöhung der Aktivierung mittels Strahlung, z. B. mittels Mikrowellenstrahlung oder Laserstrahlung, versehen ist.

9. Möbelplatte mit einer an einer Schmalfläche befestigten Kantenleiste nach einem der Ansprüche 1 bis 8.

10. Möbelplatte nach Anspruch 9, **dadurch gekennzeichnet, dass** die Schmelzschicht der Kantenleiste mit Mikrowellenstrahlung, Laserstrahlung oder Heißluft aufgeschmolzen ist.

## Claims

1. An edging strip covering narrow surfaces of panel-shaped workpieces, more particular of furniture panels, with at least one cover layer on the front and a melting layer of thermoplastic TPU-based synthetic material for fastening the edging strip onto the panel-shaped workpiece, wherein the melting layer is made of a polymer mixture (polymer blend), **characterised in that** the polymer mixture comprise at least a TPU polymer and at least an additional polymer with increased polarity compared to the TPU polymer,
wherein the additional polymer is a styrene copolymer.

2. The edging strip according to claim 1, **characterised in that** the additional polymer is a styrene maleic anhydride copolymer.

3. The edging strip according to claim 1 or 2, **characterised in that** the proportion of the additional copolymer in the polymer mixture is 2 to 20 % by weight, e.g. 3 to 10 % by weight.

4. The edging strip according to any one of claims 1 to 3, **characterised in that** in addition to the additional polymer, the polymer mixture also contains a further polymer, e.g. ethylene methacrylate (EMA).

5. The edging strip according to claim 4, **characterised in that** the proportion of the further polymer, e.g. EMA, in the polymer mixture is 2 to 20 % by weight, e.g. 3 to 10% by weight.

6. The edging strip according to any one of claims 1 to 5, **characterised in that** the cover layer is made of ABS or PP.

7. The edging strip according to any one of claims 1 to 6, **characterised in that** the melting layer can be melted on with microwave radiation, laser radiation or hot air.

8. The edging strip according to claim 7, **characterised in that** the melting layer is provided with at least an additive for increasing the activation through radiation, e.g. by means of microwave radiation or laser radiation.

9. A furniture panel with an edging strip according to any one of claims 1 to 8 fastened to the narrow surface.

10. The furniture panel according to claim 9, **characterised in that** the melting layer of the edging strip is melted on with microwave radiation, laser radiation or hot air.

## Revendications

1. Baguette de bordure pour le revêtement de surface étroite de pièces en forme de panneau, en particulier de panneaux de meubles, avec au moins une couche de couverture frontale et une couche fondue en matière thermoplastique à base de polyuréthane thermoplastique (PUT) pour la fixation de la baguette de bordure à la pièce en forme de panneau, sachant que la couche fondue est composée d'un mélange de polymères, **caractérisée en ce que** le mélange de polymères est composé d'au moins un polymère de polyuréthane thermoplastique (PUT) et d'au moins un polymère additif avec une polarité augmentée par rapport au polymère PUT,
sachant que le polymère additif est un copolymère à base de styrène.

2. Baguette de bordure selon la revendication 1, **caractérisée en ce que** le polymère additif est un copolymère styrène-anhydride d'acide maléique.

3. Baguette de bordure selon la revendication 1 ou 2, **caractérisée en ce que** la partie du polymère additif représente 2 à 20 % / poids, par ex. : 3 à 10 % / poids dans le mélange de polymères.

4. Baguette de bordure selon l'une quelconque des revendications 1 à 3, **caractérisée en ce que** le mélange de polymères contient un autre polymère, par ex. : éthylène méthacrylate (EMA), en plus du polymère additif avec une polarité augmentée.

5. Baguette de bordure selon la revendication 4, **caractérisée en ce que** la part de l'autre polymère, par ex. : EMA, représente 2 à 20 % / poids, par ex. : 3 à 10 % / poids, dans le mélange de polymères.

6. Baguette de bordure selon l'une quelconque des revendications 1 à 5, **caractérisée en ce que** la couche de couverture est composée d'acrylonitrile-butadiène-styrène (ABS) ou de polypropylène (PP).

7. Baguette de bordure selon l'une quelconque des revendications 1 à 6, **caractérisée en ce que** la couche fondue peut être fondue par rayonnement à microondes, rayonnement au laser ou avec de l'air chaud.

8. Baguette de bordure selon la revendication 7, **caractérisée en ce que** la couche fondue est munie d'au moins un additif pour augmenter l'activation au moyen d'un rayonnement, par ex. : au moyen d'un rayonnement à microondes ou d'un rayonnement au laser.

9. Panneau de meuble avec une baguette de bordure fixée à une surface étroite selon l'une quelconque des revendications 1 à 8.

10. Panneau de meuble selon la revendication 9, **caractérisé en ce que** la couche fondue de la baguette de bordure est fondue avec un rayonnement à microondes, un rayonnement au laser ou de l'air chaud.
